# EUROPEAN PATENT SPECIFICATION

(11) **EP 2 474 386 B1**
(45) Date of publication and mention of the grant of the patent: **16.01.2013**
(21) Application number: 12150236.3
(22) Date of filing: 05.01.2012
(51) Int. Cl.: B23Q 11/00

(54) **Dust extractor**
Staubabziehvorrichtung
Extracteur de fumée

(30) Priority: 07.01.2011 GB 201100214
(43) Date of publication of application: 11.07.2012
(73) Proprietor: Black & Decker Inc., Newark, Delaware 19711 (US)
(72) Inventor: Hahn, Norbert, 65510 Hunstetten-Limbach (DE); Foerster, Alexander, 65195 Wiesbaden (DE)
(74) Representative: Bell, Ian Stephen

(56) References cited:
- EP-A1- 0 799 674
- EP-A2- 0 456 598
- DE-A1- 2 741 536
- DE-A1- 4 310 691

## Description

The present invention relates to a dust extractor for a drill or a hammer drill. EP1872913 describes a pavement breaker which is a large hammer drill which operates in a single mode of operation, namely, hammer only mode. During the operation of such a pavement breaker, a large amount of dust is generated by the cutting tool. It is desirable to reduce the amount of dust which enters the surrounding atmosphere where the pavement breaker is being used. Therefore, it is desirable to collect as much dust as possible as it is generated. One way of collecting the dust is to use a dust extractor with the pavement breaker. DE2741536, EP0456598 and EP0799674 provide examples of such dust extractors.

Accordingly there is provided a dust extractor for a hammer drill or drill comprising:
a hood;
a mounting mechanism connected to the hood which is capable of being attached to the housing of a hammer or drill;
wherein the hood comprises a first tubular passage which extends through the length of the hood and through which a cutting tool can pass;
a second tubular passage, one end of which engages with the first passage inside of the hood, the other end of which is capable of being connected to a vacuum cleaner;
characterized in that the hood is manufactured from a resiliently deformable material and comprises a slit which extends through the side of the hood along the length of the hood and which provides a passage through the side of the hood to the first passage, the sides of the slit being biased into engagement with each other but which are capable of being parted by the deformation of the resiliently deformable material of the hood to allow a cutting tool to pass through the slit in order to be located in or removed the first passage.

An embodiment of the present invention will now be described with reference to the accompanying drawings of which:
Figure 1 shows a view of the dust extractor attached to a pavement breaker;
Figure 2 shows the mounting mechanism attached to the cylinder housing of the pavement breaker;
Figure 3 shows a horizontal cross section of the mounting mechanism attached to the cylinder housing of the pavement breaker;
Figure 4 shows a perspective view of the flexible rubber strap;
Figure 5 shows a perspective view of the mount;
Figure 6A shows a perspective view of the hood,
Figure 6B shows a top view of the hood;
Figure 6C shows a cross section view in the directions of Arrows A in Figure 6B;
Figure 6D shows a cross section view in the directions of Arrows B in Figure 6B;
Figure 6E shows a bottom view of the hood; and
Figure 7 shows a perspective view of the connector.

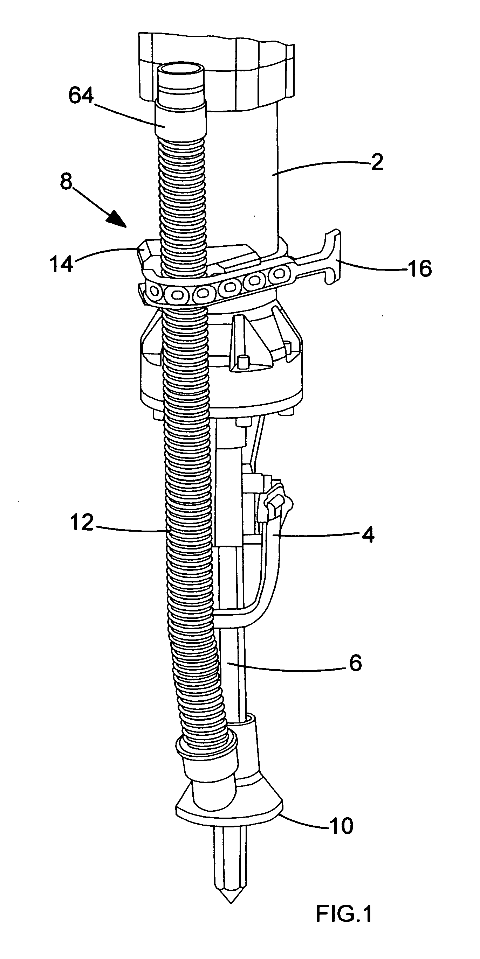

Referring to Figure 1, the pavement breaker comprises a cylinder housing 2, attached to the lower end of which is a tool holder 4. A cutting tool, in the form of a chisel 6, is mounted within the tool holder 4.

The dust extractor comprises a mounting mechanism 8 and a hood 10 connected to the mounting mechanism 8 via a flexible tube 12.

The mounting mechanism 8 comprises a plastic mount 14 and a rubber strap 16.

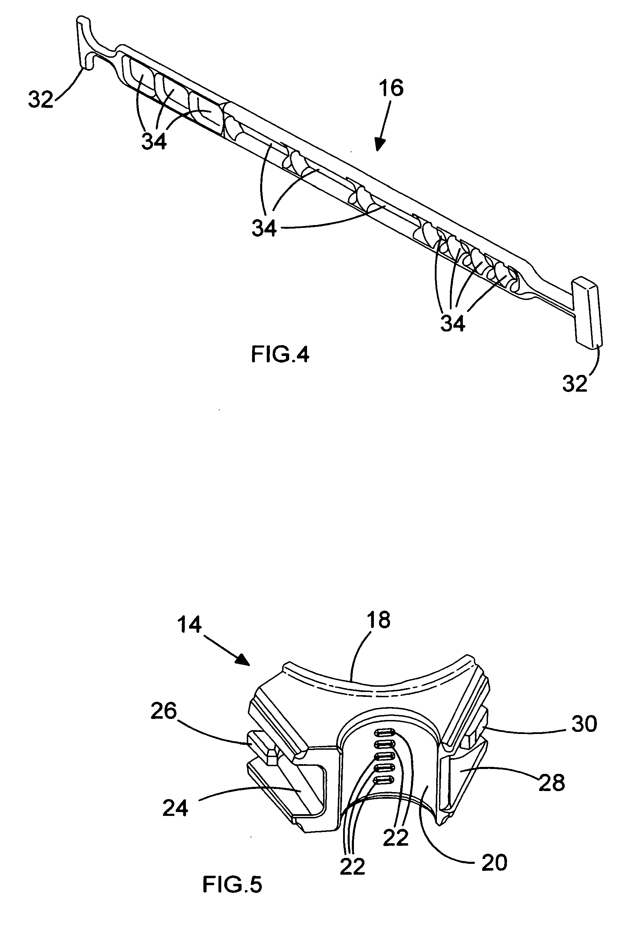

Figure 5 shows the mount 14. The mount 14 comprises a rear curved wall 18 which locates against the side of the cylinder housing 2 of the pavement breaker, the rate of curvature of the rear wall 18 being the same as that of the outer surface of the cylinder housing 2. The mount comprises a front curved wall 20 which engages with the flexible tube 12 (described in more detail below), the rate of curvature of the front wall 20 being the same as that of the outer surface of the flexible tube 12. A series of projections 22, which extend from the surface of the front wall 20, are located vertically in a straight line, with equal spacing being between adjacent projections 20. A first channel 24 is formed along a first side of the mount 14 which has a first peg 26 formed within it. A second channel 28 is formed along a second side of the mount 14 which has a second peg 30 formed within it.

The strap 16 is shown in Figure 4. The strap is made from rubber and is capable of being stretched in length against the biasing force of the rubber material. Removal of any stretching force results in the strap 16 returning to a predetermined length. The strap 16 contains a T shaped grip 32 integrally formed at each end of the strap 16. A series of apertures 34 are formed through the strap along its length.

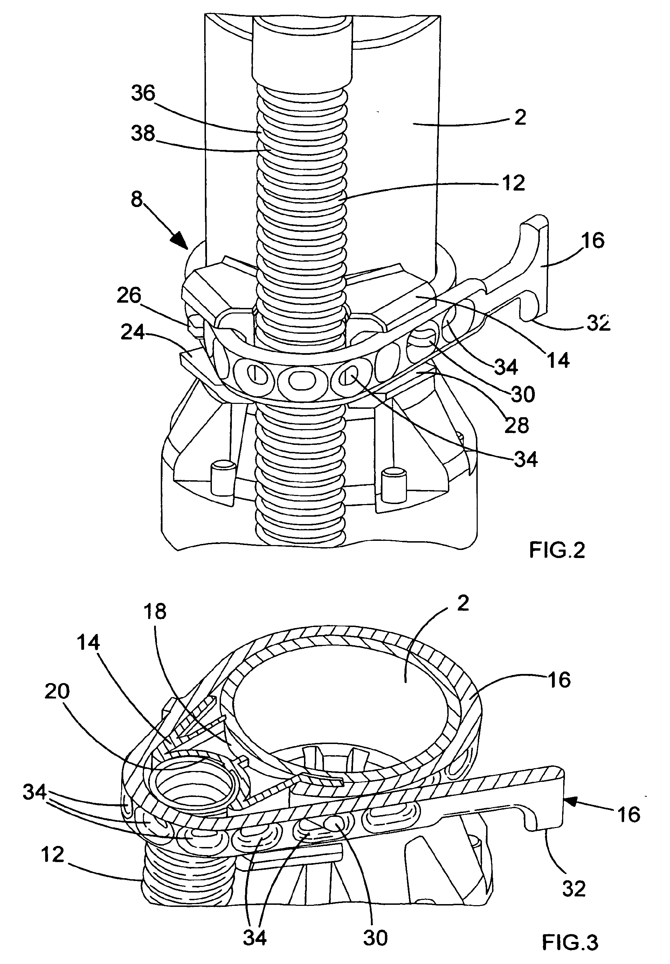

In order to attach the mount 14 to the cylinder housing, the rear curved wall 18 is placed against the outer surface of the cylinder housing 2 as seen in Figure 2. One end of the strap is connected to the mount 14 by that end of the strap 16 being located in the second channel 28 with the second peg 30 passing through one of the apertures 34 on the strap 16 to hold in place within the channel 28. The strap 16 is then wrapped around the cylinder housing (as best seen in Figures 2 and 3) and located in the first channel 24. The strap 16 is stretched to place it under tension and the first peg 26 is inserted through another aperture 34 in the strap which is aligned with the first peg 26. The mount 14 is held in place on the housing via the strap 16, the resilient force of the stretched strap 16 holding the mount 14 tightly against the cylinder housing 2.

The flexible tube comprises a metal helical spring 36, which runs the length of the tube 12, covered by a flexible plastic coating 38. The spring 36 provides structural support for the tube 12 whilst allowing the tube to bend or stretch by a limited amount, the plastic coating stretching to accommodate the bending or stretching movement. The pitch of the spring 26 corresponds to the distance between adjacent projections 22 on the mount.

In order to attach the tube 12 to the mount 14 (which is done so after the mount 14 is attached to the cylinder housing 2), the tube 12 is located against the front curve wall 20 as shown in Figure 2. Each projection 22 on the mount 14 locates in a gap formed between adjacent sections, in a lengthwise direction, of the helical spring 36. The free end of the strap 16, which is attached to the first peg 26 in the first channel is wrapped around the tube 12 and located in the second channel 28, on top of the first end, the second peg being inserted through another aperture 34 in the strap 16 which is aligned with the second peg 30. The second peg 30 therefore holds the strap 16 at two points. The strap 16 is stretched to place it under tension to hold the tube firmly. The projections 22 prevent the tube 22 from sliding lengthways within the mount 14.

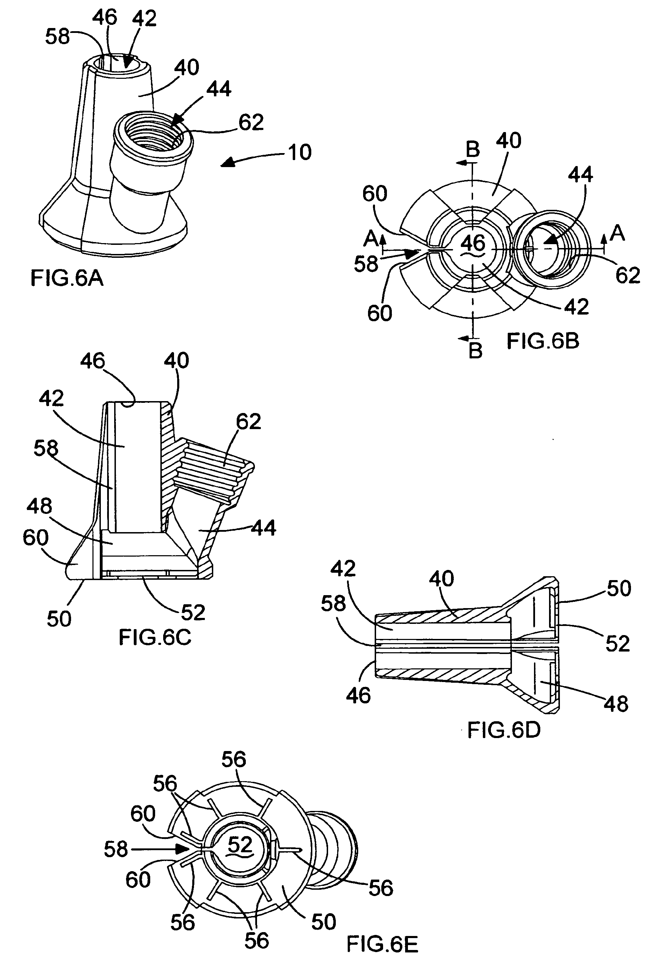

The hood 10 is connected to the lower end of the tube 12. The hood is shown in Figures 6A to 6E and is made from resiliently deformable material such as rubber. The reader will appreciate that other types of resiliently deformable material can be used. The hood 10 comprises a cone shaped body 40 with a first tubular passage 42 extending from an aperture 46 formed in the top of the body 40 to a chamber 48 formed in the base 50 of the body 40. A second aperture 52 is formed through the base 50 and connects to the chamber 48. A large slit 58 which extends the full length of the body 40 is formed in through the wall of the body 40 and meets with the side first tubular passage 42 and the chamber 48. When the hood is not deformed, the sides 60 of the slit 58 engage with each other to ensure that the first tubular passage 42 and chamber 48 are sealed along their sides. The sides 60 of the of the large sit 58 can be manually separated, the body 40 deforming due to the resilient nature of the material from which the hood 10 is made, providing an entrance to the first tubular passage 42 and chamber through the side wall of the body 40.

A second tubular passage 44 extends through the side of the body 2. The lower end of the second tubular passage 44 meets with the chamber 48. The upper section 62 of the second passage is threaded, the pitch of the thread being the same as that of the helical spring 36 in the flexible tube 12. The tube 12 can be screwed into the upper section 62 by the helical spring 36 threadedly engaging with the threads in side of the second tubular passage 44.

The base 50 comprises a series of small slits 56 which extend from radially outwardly from the second aperture 52 (see Figure 6E) which results in the base 50 being in the form of segments. These allow the base 50 to deform easily when the large slit 58 is opened to provide access to the first tubular passage 42 and chamber 48.

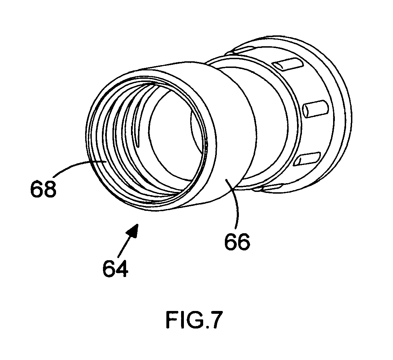

Figure 7 shows a connector 64 which connects onto the free end of the tube 12 as shown in Figure 1. The connector comprises a tubular body 66. The lower section 68 is threaded, the pitch of the thread being the same as that of the helical spring 36 in the flexible tube 12. The tube 12 can be screwed into the lower section 68 by the helical spring 36 threadedly engaging with the threads in side of the lower section 68.

In order to use the dust extractor, the mount 14 is attached to the cylinder housing 2 as described above. The tube 12 is screwed into the threaded section 62 of second tubular passage 44 to secure it to the hood 10. The sides 60 of the large slit 58 of the hood 10 are manually prized apart against the biasing force of the resilient material of the hood and the cutting tool 6 is slid sideways into the first tubular passage 42 and chamber 48. The sides 60 of the large slit 58 are then released and the sides 60 engage with each other to seal the side of the first passage and chamber 48. As such, the cutting tool 6 extends through the hood 10, the hood being able to slide up and down the cutting tool 6. The advantage of this is that the tip of the cutting tool can remain engaged with the work surface at all times whilst the hood 10 is mounted on the cutting tool 6 in order to support the weight of the pavement breaker which is considerable.

The position of the hood 10 on the cutting tool is determined and the tube 12 is attached to the mount as described above. As such the position of the hood 10 remains fixed along the length of the tool 6. The connector 64 is attached to the top end of the tube 12. A separate vacuum cleaner (not shown) is connected to the connector and activated. As the pavement breaker is utilized, dust created by the cutting action of the pavement breaker enters the chamber 48 where it is sucked through the second passageway 44, through the tube 12, through the connector 64 and then into the vacuum cleaner.

The flexible tube 12 both supports the hood 10 and provides the conduit through which the air and debris are sucked out of the hood 10.

Whilst the use of the embodiment of the dust extractor has been described in relation to a pavement breaker, it will be appreciated that tit could be used in relation to any type of drill or hammer drill.

## Claims

1. A dust extractor for a hammer drill or drill comprising:
a hood (10);
a mounting mechanism (8) connected to the hood (10) which is capable of being attached to the housing of a hammer or drill;
wherein the hood (10) comprises a first tubular passage (42; 48) which extends through the length of the hood (10) and through which a cutting tool (6) can pass;
a second tubular passage (44), one end of which engages with the first passage (42; 48) inside of the hood, the other end of which is capable of being connected to a vacuum cleaner;
**characterized in that** the hood is manufactured from a resiliently deformable material and comprises a slit (58) which extends through the side of the hood along the length of the hood and which provides a passage through the side of the hood to the first passage (42; 48), the sides (60) of the slit (58) being biased into engagement with each other but which are capable of being parted by the deformation of the resiliently deformable material of the hood to allow a cutting tool to pass through the slit (58) in order to be located in or removed the first passage (42; 48).

2. A dust extractor as claimed in claim 1 wherein the mounting mechanism comprises a mount (14) which is capable of attaching to the housing of a hammer drill or drill.

3. A dust extractor as claimed in claim 2 wherein the mount is capable of being attached by a stretchable strap (16) which is connects to the mount and which is capable of wrapping around the housing of a hammer drill or drill.

4. A dust extractor as claimed in any of the previous claims wherein the mounting mechanism is connected to the hood via a tube (12), the entrance of the tube at one end connecting to the second tubular passage in the hood, the exit at the other end of the tube being capable of being connected to a vacuum cleaner.

5. A dust extractor according to claim 4 wherein the tube is flexible.

6. A dust extractor according to any one of claims 4 or 5 wherein the mounting mechanism attaches to the side of the tube.

7. A dust extractor according to any one of claims 4 to 6 wherein the tube is constructed from a helical spring (36) coated with a flexible material 38).

8. A dust extractor according to claim 7 wherein the mounting mechanism comprises a mount (14) having a recess (20) for receiving the side of the tube, wherein a plurality of projections (22) are formed on the wall of the recess to engage with helical spring of the tube to prevent it axially sliding within the recess.

9. A dust extractor according to claim 8 wherein the tube is held within the recess by a stretchable strap (16) which is connects to the mount and which wraps around the tube.

10. A dust extractor according to claim 9 wherein the same stretchable strap which connects the tube to the mount is also capable of connects the mount to a housing of a hammer drill or drill.

11. A dust extractor according to any one of claims 7 to 10 wherein the second tubular passage comprises a threaded portion, wherein the helical spring of the tube threadedly engages with the threaded portion of the of the second passage to secure the tube to the hood.

12. A dust extractor according to any one of claims 7 to 11 wherein there is further provided a tubular connector (64) which attaches the exit end of the tube and which is capable of being connected to a vacuum cleaner, the connector comprising a threaded portion (68), wherein the helical spring of the tube threadedly engages with the threaded portion of the connector to secure the connector to the hood.

## Patentansprüche

1. Staubabsauger für eine Schlagbohrmaschine oder eine Bohrmaschine, der Folgendes umfasst:
eine Haube (10),
einen Anbringungsmechanismus (8), der mit der Haube (10) verbunden ist, der dazu in der Lage ist, an dem Gehäuse einer Schlagbohrmaschine oder einer Bohrmaschine befestigt zu werden,
wobei die Haube (10) einen ersten röhrenförmigen Durchgang (42; 48) umfasst, der sich durch die Länge der Haube (10) erstreckt und durch den ein Schneidwerkzeug (6) hindurchgehen kann,
einen zweiten röhrenförmigen Durchgang (44), dessen eines Ende mit dem ersten Durchgang (42; 48) innerhalb der Haube ineinandergreift, wobei das andere Ende desselben dazu in der Lage ist, mit einem Staubsauger verbunden zu werden,
**dadurch gekennzeichnet, dass** die Haube aus einem elastisch verformbaren Werkstoff gefertigt ist und einen Schlitz (58) umfasst, der sich durch die Seite der Haube entlang der Länge der Haube erstreckt und der einen Durchgang durch die Seite der Haube zu dem ersten Durchgang (42; 48) bereitstellt, wobei die Seiten (60) des Schlitzes (58) in einen Eingriff miteinander vorgespannt werden, aber dazu in der Lage sind, durch die Verformung des elastisch verformbaren Werkstoffs der Haube getrennt zu werden, um zu ermöglichen, dass ein Schneidwerkzeug durch den Schlitz (58) hindurchgeht, um in dem ersten Durchgang (42; 48) angeordnet oder aus demselben entfernt zu werden.

2. Staubabsauger nach Anspruch 1, wobei der Anbringungsmechanismus eine Halterung (14) umfasst, die dazu in der Lage ist, an dem Gehäuse einer Schlagbohrmaschine oder einer Bohrmaschine befestigt zu werden.

3. Staubabsauger nach Anspruch 2, wobei die Halterung dazu in der Lage ist, durch ein dehnbares Band (16) befestigt zu werden, das mit der Halterung verbunden ist und das dazu in der Lage ist, um das Gehäuse einer Schlagbohrmaschine oder einer Bohrmaschine gewickelt zu werden.

4. Staubabsauger nach einem der vorhergehenden Ansprüche, wobei der Anbringungsmechanismus über eine Röhre (12) mit der Haube verbunden ist, wobei der Eingang der Röhre an dem einen Ende mit dem zweiten röhrenförmigen Durchgang in der Haube verbunden ist, wobei der Ausgang an dem anderen Ende der Röhre dazu in der Lage ist, mit einem Staubsauger verbunden zu werden.

5. Staubabsauger nach Anspruch 4, wobei die Röhre flexibel ist.

6. Staubabsauger nach einem der Ansprüche 4 oder 5, wobei der Anbringungsmechanismus an der Seite der Röhre befestigt ist.

7. Staubabsauger nach einem der Ansprüche 4 bis 6, wobei die Röhre aus einer Schraubenfeder (36), die mit einem flexiblen Werkstoff (38) überzogen ist, aufgebaut ist.

8. Staubabsauger nach Anspruch 7, wobei der Anbringungsmechanismus eine Halterung (14) umfasst, die eine Aussparung (20) hat, um die Seite der Röhre aufzunehmen, wobei mehrere Vorsprünge (22) an der Wand der Aussparung geformt sind, um mit der Schraubenfeder der Röhre ineinanderzugreifen, um zu verhindern, dass sie sich innerhalb der Aussparung in Axialrichtung verschiebt.

9. Staubabsauger nach Anspruch 8, wobei die Röhre durch ein dehnbares Band (16), das mit der Halterung verbunden ist und das um die Röhre gewickelt ist, innerhalb der Aussparung gehalten wird.

10. Staubabsauger nach Anspruch 9, wobei das gleiche dehnbare Band, das die Röhre mit der Halterung verbindet, ebenfalls dazu in der Lage ist, die Halterung mit einem Gehäuse einer Schlagbohrmaschine oder einer Bohrmaschine zu verbinden.

11. Staubabsauger nach einem der Ansprüche 7 bis 10, wobei der zweite röhrenförmige Durchgang einen mit Gewinde versehenen Abschnitt umfasst, wobei die Schraubenfeder der Röhre schraubend mit dem mit Gewinde versehenen Abschnitt des zweiten Durchgangs ineinandergreift, um die Röhre an der Haube zu befestigen.

12. Staubabsauger nach einem der Ansprüche 7 bis 11, wobei ferner ein röhrenförmiger Verbinder (64) bereitgestellt wird, der an dem Ausgangsende der Röhre befestigt ist und der dazu in der Lage ist, mit einem Staubsauger verbunden zu werden, wobei der Verbinder einen mit Gewinde versehenen Abschnitt (68) umfasst, wobei die Schraubenfeder der Röhre schraubend mit dem mit Gewinde versehenen Abschnitt des Verbinders ineinandergreift, um den Verbinder an der Haube zu befestigen.

## Revendications

1. Extracteur de poussière pour foret de percussion ou foret standard, comprenant :
une hotte (10) ;
un mécanisme de montage (8) raccordé à la hotte (10) et qui peut être fixé au boîtier d'un foret de percussion ou d'un foret standard ;
dans lequel la hotte (10) comprend un premier passage tubulaire (42 ; 48) qui s'étend sur la longueur de la hotte (10) et à travers lequel un outil de coupe (6) peut passer ;
un second passage tubulaire (44), dont une extrémité s'engage sur le premier passage (42 ; 48) à l'intérieur de la hotte et dont l'autre extrémité peut être raccordée à un aspirateur,
**caractérisé en ce que** la hotte est fabriquée dans un matériau à déformation élastique et comprend une fente (58) qui s'étend à travers le côté de la hotte sur la longueur de celle-ci et qui fournit un passage à travers le côté de la hotte au premier passage (42 ; 48), les côtés (60) de la fente (58) étant pressés en engagement mutuel, mais étant à même d'être séparés par la déformation du matériau à déformation élastique de la hotte pour permettre à un outil de coupe de passer à travers la fente (58) afin d'être placé dans le premier passage (42 ; 48) ou d'en être retiré.

2. Extracteur de poussière selon la revendication 1, dans lequel le mécanisme de montage comprend une monture (14) qui est à même de se fixer au boîtier d'un foret de percussion ou d'un foret standard.

3. Extracteur de poussière selon la revendication 2, dans lequel la monture est à même d'être fixée par un ruban étirable (16) qui est raccordé à la monture et qui est à même de s'enrouler autour du boîtier d'un foret de percussion ou d'un foret standard.

4. Extracteur de poussière selon l'une quelconque des revendications précédentes, dans lequel le mécanisme de montage est raccordé à la hotte via un tube (12), l'entrée du tube à une extrémité se raccordant au second passage tubulaire dans la hotte, la sortie à l'autre extrémité du tube étant à même d'être raccordée à un aspirateur.

5. Extracteur de poussière selon la revendication 4, dans lequel le tube est flexible.

6. Extracteur de poussière selon l'une quelconque des revendications 4 ou 5, dans lequel le mécanisme de montage se fixe au côté du tube.

7. Extracteur de poussière selon l'une quelconque des revendications 4 à 6, dans lequel le tube est constitué d'un ressort hélicoïdal (36) revêtu d'un matériau flexible (38).

8. Extracteur de poussière selon la revendication 7, dans lequel le mécanisme de montage comprend une monture (14) présentant un évidement (20) pour recevoir le côté du tube, dans lequel une pluralité de saillies (22) est formée sur la paroi de l'évidement pour s'engager sur le ressort hélicoïdal du tube pour l'empêcher de glisser axialement dans l'évidement.

9. Extracteur de poussière selon la revendication 8, dans lequel le tube est maintenu dans l'évidement par un ruban étirable (16) qui se raccorde à la monture et qui s'enroule autour du tube.

10. Extracteur de poussière selon la revendication 9, dans lequel le même ruban étirable qui raccorde le tube à la monture est également à même de raccorder la monture à un boîtier d'un foret de percussion ou d'un foret standard.

11. Extracteur de poussière selon l'une quelconque des revendications 7 to 10, dans lequel le second passage tubulaire comprises une portion taraudée, dans lequel le ressort hélicoïdal du tube s'engage par vissage sur la portion taraudée du second passage pour fixer le tube à la hotte.

12. Extracteur de poussière selon l'une quelconque des revendications 7 to 11, dans lequel il est encore prévu un raccord tubulaire (64) qui fixe l'extrémité de sortie du tube et qui est à même d'être raccordé à un aspirateur, le raccord comprenant une portion taraudée (68), dans lequel le ressort hélicoïdal du tube s'engage par vissage sur la portion taraudée du raccord pour fixer le raccord à la hotte.
